# EUROPEAN PATENT APPLICATION

(11) **EP 4 191 697 A1**
(43) Date of publication of application: **07.06.2023**
(21) Application number: 21849440.9
(22) Date of filing: 09.07.2021
(51) Int. Cl.: H01M 4/13, H01M 4/133, H01M 4/36, H01M 4/38, H01M 4/48, H01M 4/587, H01M 10/0587

(54) **NONAQUEOUS ELECTROLYTE SECONDARY BATTERY**

(30) Priority: 31.07.2020 JP 2020129866
(71) Applicant: SANYO Electric Co., Ltd., Daito-shi Osaka 574-8534 (JP)
(72) Inventor: AOTANI, Masashi, Chuo-ku, Osaka-shi, Osaka 540-6207 (JP)
(74) Representative: Novagraaf International SA
(86) International application number: PCT/JP2021/025880
(87) International publication number: WO 2022/024712

(57) **Abstract**

The purpose of the present disclosure is to provide a nonaqueous electrolyte secondary battery configured to suppress the occurrence of internal short-circuiting in the vicinity of the inner side end of winding. This nonaqueous electrolyte secondary battery according to one embodiment includes: an electrode body in which a positive electrode and a negative electrode are wound with a separator therebetween; a nonaqueous electrolyte; and an exterior body for housing the electrode body and the nonaqueous electrolyte. A negative electrode (12) includes a first negative electrode active material, and a second negative electrode active material, the second negative electrode active material exhibiting a greater expansion rate than the first negative electrode active material during charging. When the proportion of mass of the second negative electrode active material with respect to the total mass of the first negative electrode active material and the second negative electrode material is defined as the second negative electrode active material ratio, the second negative electrode active material ratio on the side of the inner winding end (12a) is smaller than the second negative electrode active material ratio on the side of the outer winding end (12b).

## Description

### TECHNICAL FIELD

The present disclosure generally relates to a non-aqueous electrolyte secondary battery.

### BACKGROUND ART

Conventionally widely used is a non-aqueous electrolyte secondary battery comprising: a wound electrode assembly in which a band-shaped positive electrode and negative electrode are wound with a separator interposed therebetween; and a metallic case that houses the wound electrode assembly. In recent years, from the viewpoint of higher battery capacity, use of a Si-based material including silicon (Si) has been investigated, which may occlude more lithium ions per unit mass than a carbonaceous material such as graphite, as a negative electrode active material included in a negative electrode mixture layer. Patent Literature 1 discloses a negative electrode containing a Si-based material in a mixture layer at a predetermined proportion. Patent Literature 2 discloses a negative electrode in which a content of a Si-based material increases toward a surface side along a thickness direction in the negative electrode mixture layer.

### CITATION LIST

### PATENT LITERATURE

PATENT LITERATURE 1: Japanese Unexamined Patent Application Publication No. 2010-212228
PATENT LITERATURE 2: Japanese Unexamined Patent Application Publication No. 2013-178913

### SUMMARY

### TECHNICAL PROBLEM

In the wound electrode assembly, an expanded electrode plate due to charge of the battery applies a higher pressure near an internal winding end part than near an external winding end part, which may break a part of the separator to cause a minute short-circuit. In particular, since the Si-based material has larger change in volume by occlusion of lithium ions than the carbonaceous material, the negative electrode including the Si-based material has larger risk of causing the minute short-circuit. Inhibition of occurrence of the internal short-circuit near the internal winding end part in the electrode assembly is not investigated in Patent Literatures 1 and 2, and still has room for improvement.

It is an advantage of the present disclosure to provide a negative electrode inhibiting the occurrence of the internal short-circuit near the internal winding end part.

### SOLUTION TO PROBLEM

A non-aqueous electrolyte secondary battery according to an aspect of the present disclosure comprises: an electrode assembly in which a positive electrode and a negative electrode are wound with a separator interposed therebetween; a non-aqueous electrolyte; and an exterior housing the electrode assembly and the non-aqueous electrolyte, wherein the negative electrode includes: a first negative electrode active material; and a second negative electrode active material having a larger expansion coefficient during charge than the first negative electrode active material, and when a proportion of a mass of the second negative electrode active material to a total mass of the first negative electrode active material and the second negative electrode active material is defined as a percentage of the second negative electrode active material, the percentage of the second negative electrode active material on an internal winding end part side is smaller than the percentage of the second negative electrode active material on an external winding end part side.

### ADVANTAGEOUS EFFECT OF INVENTION

The non-aqueous electrolyte secondary battery according to the present disclosure may inhibit occurrence of the internal short-circuit near the internal winding end part of the electrode assembly to improve reliability of the battery.

### BRIEF DESCRIPTION OF DRAWINGS

FIG. 1 is an axial sectional view of a cylindrical secondary battery of an example of an embodiment.
FIG. 2 is a perspective view of a wound electrode assembly comprised in the secondary battery illustrated in FIG. 1.
FIG. 3 is a front view illustrating a positive electrode and negative electrode constituting an electrode assembly of an example of an embodiment with an unwound state.

### DESCRIPTION OF EMBODIMENTS

Hereinafter, an example of an embodiment of a cylindrical secondary battery according to the present disclosure will be described in detail with reference to the drawings. In the following description, specific shapes, materials, values, directions, and the like, which are examples for facilitating understanding of the present invention, may be appropriately modified with specifications of cylindrical secondary batteries. When the following description includes a plurality of embodiments and modified examples, use in appropriate combination of characteristic portions thereof are anticipated in advance.

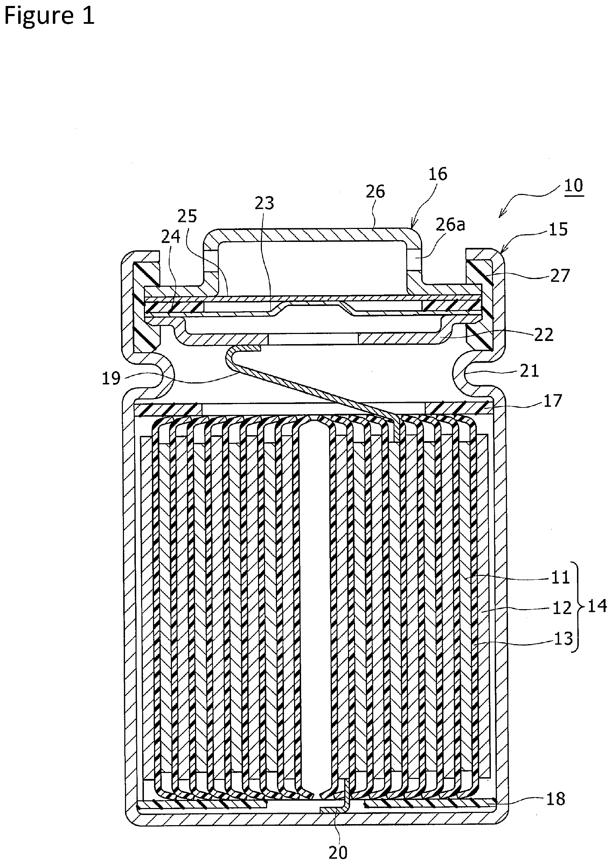

FIG. 1 is an axial sectional view of a cylindrical secondary battery 10 of an example of an embodiment. In the secondary battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound with a separator 13 interposed therebetween. For a non-aqueous solvent (organic solvent) of the non-aqueous electrolyte, carbonates, lactones, ethers, ketones, esters, and the like may be used, and two or more of these solvents may be mixed to be used. When two or more of the solvent are mixed to be used, a mixed solvent including a cyclic carbonate and a chain carbonate is preferably used. For example, ethylene carbonate (EC), propylene carbonate (PC), butylene carbonate (BC), and the like may be used as the cyclic carbonate, and dimethyl carbonate (DMC), ethyl methyl carbonate (EMC), diethyl carbonate (DEC), and the like may be used as the chain carbonate. For an electrolyte salt in the non-aqueous electrolyte, LiPF₆, LiBF₄, LiCF₃SO₃, and the like, and a mixture thereof may be used. An amount of the electrolyte salt dissolved in the non-aqueous solvent may be, for example, 0.5 to 2.0 mol/L. Hereinafter, for convenience of description, the sealing assembly 16 side will be described as "the upper side", and the bottom side of the exterior 15 will be described as "the lower side".

An opening end of the exterior 15 is capped with a sealing assembly 16 to seal inside of the secondary battery 10. Insulating plates 17 and 18 are provided on the upper and lower sides of the electrode assembly 14, respectively. A positive electrode lead 19 extends upward through a through hole of the insulating plate 17, and welded with the lower face of a filter 22, which is a bottom plate of the sealing assembly 16. In the secondary battery 10, a cap 26, which is a top plate of the sealing assembly 16 electrically connected to the filter 22, becomes a positive electrode terminal. Meanwhile, a negative electrode lead 20 extends through a through hole of the insulating plate 18 toward the bottom side of the exterior 15, and welded with a bottom inner face of the exterior 15. In the secondary battery 10, the exterior 15 becomes a negative electrode terminal. The negative electrode 12 is positioned on the outermost circumference surface of the electrode assembly 14, and the negative electrode 12 is contacted with the exterior 15.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a groove 21 formed by, for example, pressing the side wall thereof from the outside to support the sealing assembly 16. The groove 21 is preferably formed circularly along the circumferential direction of the exterior 15, and supports the sealing assembly 16 with the upper face thereof.

The sealing assembly 16 has a stacked structure of a filter 22, a lower vent member 23, an insulating member 24, an upper vent member 25, and a cap 26 in this order from the electrode assembly 14 side. Each member constituting the sealing assembly 16 has, for example, a disk shape or a ring shape, and each member except for the insulating member 24 is electrically connected each other. The lower vent member 23 and the upper vent member 25 are connected each other at each of central parts thereof, and the insulating member 24 is interposed between each of the circumferential parts of the vent members 23 and 25. If the internal pressure of the battery increases with abnormal heat generation, for example, the lower vent member 23 breaks and the upper vent member 25 expands toward the cap 26 side to be separated from the lower vent member 23, resulting in cutting off of an electrical connection between the both members. If the internal pressure further increases, the upper vent member 25 breaks, and gas is discharged through an opening 26a of the cap 26.

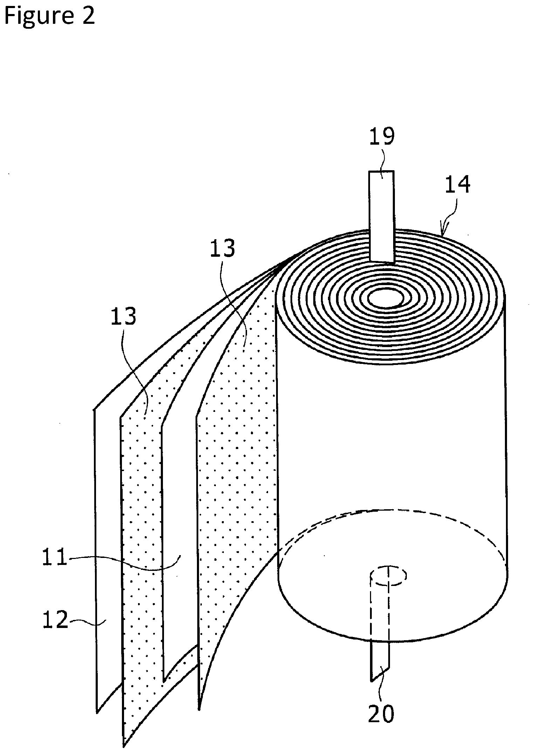

Next, the electrode assembly 14 will be described with reference to FIG. 2. FIG. 2 is a perspective view of the wound electrode assembly 14 comprised in the secondary battery 10 illustrated in FIG. 1. The electrode assembly 14 is constituted of the band-shaped positive electrode 11, the band-shaped negative electrode 12, the two band-shaped separators 13, the positive electrode lead 19 bonded to the positive electrode 11, and the negative electrode lead 20 bonded to the negative electrode 12. The positive electrode 11, the negative electrode 12, and the separators 13 are spirally wound around a winding axis to form an alternately stacked state in the radial direction of the electrode assembly 14. The two separators 13 are formed one size larger than the positive electrode 11 and disposed to sandwich the positive electrode 11. The negative electrode 12 is exposed on the outermost circumference of the electrode assembly 14. Here, in the radial direction of the electrode assembly 14, the winding axis side is referred to as the internal circumference side, and an opposite side thereof is referred to as the external circumference side. In the electrode assembly 14, the longitudinal direction of the positive electrode 11 and negative electrode 12 corresponds to the winding direction, and the band width direction of the positive electrode 11 and negative electrode 12 corresponds to the axial direction. The positive electrode lead 19 extends, on the upper end of the electrode assembly 14, toward the axial direction from a substantial center between the center and the outermost circumference in the radial direction. The negative electrode lead 20 extends, on the lower end of the electrode assembly 14, toward the axial direction from near the winding axis.

For the separator 13, a porous sheet having an ion permeation property and an insulation property is used. Specific examples of the porous sheet include a fine porous thin film, a woven fabric, and a nonwoven fabric. As a material of the separator 13, an olefin resin such as polyethylene and polypropylene is preferable. A thickness of the separator 13 is, for example, 10 µm to 50 µm. The separator 13 tends to be made thinner as the battery has a higher capacity and a higher output. The separator 13 has a melting point of, for example, approximately 130°C to 180°C.

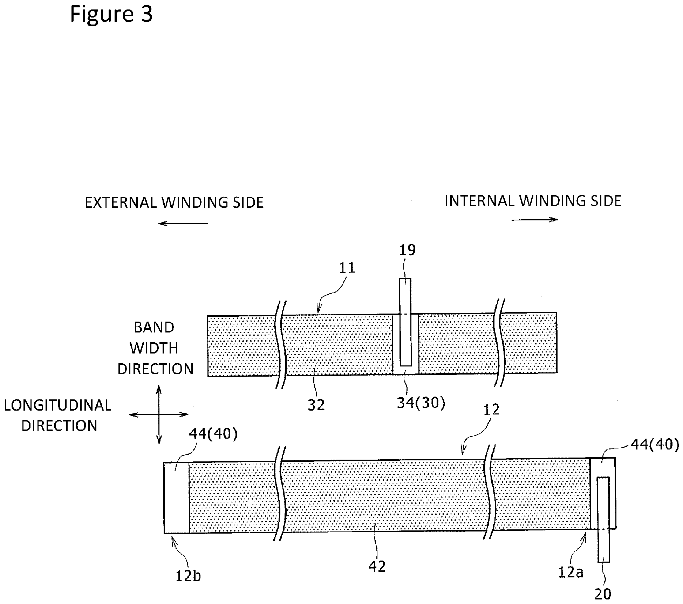

Next, the positive electrode 11 and negative electrode 12 constituting the electrode assembly 14 will be described with reference to FIG. 3. FIG. 3 is a front view of the positive electrode 11 and the negative electrode 12 with an unwound state. As illustrated in FIG. 3, the negative electrode 12 is formed larger than the positive electrode 11 to prevent precipitation of lithium on the negative electrode 12 in the electrode assembly 14. Specifically, a length in the band width direction (axial direction) of the negative electrode 12 is larger than a length in the band width direction of the positive electrode 11. In addition, a length in the longitudinal direction of the negative electrode 12 is larger than a length in the longitudinal direction of the positive electrode 11. As a result, at least a portion on which the positive electrode mixture layer 32 of the positive electrode 11 is formed is disposed opposite to a portion on which negative electrode mixture layer 42 of the negative electrode 12 is formed with the separator 13 interposed therebetween when wound as the electrode assembly 14.

The positive electrode 11 has a band-shaped positive electrode current collector 30 and positive electrode mixture layers 32 formed on both surfaces of the positive electrode current collector 30. For the positive electrode current collector 30, a foil of a metal, such as aluminum, a film in which such a metal is disposed on a surface layer thereof, or the like is used, for example. A thickness of the positive electrode current collector 30 is, for example, 10 µm to 30 µm.

The positive electrode mixture layers 32 are preferably formed on an entire region of both surfaces of the positive electrode current collector 30 except for a positive electrode current collector exposed part 34, described later. The positive electrode mixture layer 32 preferably includes a positive electrode active material, a conductive agent, and a binder. The positive electrode mixture layer 32 is produced by: applying a positive electrode mixture slurry including the positive electrode active material, the conductive agent, the binder, and a solvent such as N-methyl-2-pyrrolidone (NMP) on both surfaces of the positive electrode current collector 30; and then drying and compressing the positive electrode mixture layer 32.

In the example illustrated in FIG. 3, the positive electrode current collector exposed part 34 is provided on a central part in the longitudinal direction of the positive electrode 11 and over an entire length in the band width direction. This improves the current collectability. The positive electrode current collector exposed part 34 is a portion where a surface of the positive electrode current collector 30 is uncovered with the positive electrode mixture layer 32. The positive electrode current collector exposed part 34 is provided by, for example, intermittent application in which the positive electrode mixture slurry is not applied on a part of the positive electrode current collector 30.

Onto the positive electrode current collector exposed part 34, one end of the positive electrode lead 19 is connected with ultrasonic welding or the like. The positive electrode current collector exposed part 34 is preferably provided on both surfaces of the positive electrode 11 to be stacked in the thickness direction of the positive electrode 11 from a viewpoint of operability of connecting the positive electrode lead 19. The other end of the positive electrode lead 19 extends upward from the end surface in the band width direction at a medial position in the radial direction of the electrode assembly 14 when wound as the electrode assembly 14. The position of the positive electrode lead 19 to be disposed is not particularly limited to the example illustrated in FIG. 3, and the position may be an internal winding end part or an external winding end part, for example.

Examples of the positive electrode active material included in the positive electrode mixture layer 32 include a lithium-containing transition metal oxide containing a transition metal element such as Co, Mn, and Ni. The lithium-containing transition metal oxide is not particularly limited, but preferably a composite oxide represented by the general formula Li₁₊ₓMO₂, wherein -0.2 < x ≤ 0.2, and M includes at least one of Ni, Co, Mn, and Al.

Examples of the conductive agent included in the positive electrode mixture layer 32 include carbon materials such as carbon black (CB), acetylene black (AB), Ketjenblack, and graphite.

Examples of the binder included in the positive electrode mixture layer 32 include fluororesins such as polytetrafluoroethylene (PTFE) and polyvinylidene fluoride (PVdF), polyacrylonitrile (PAN), a polyimide (PI), an acrylic resin, and a polyolefin resin. These materials may be used singly, or may be used in combination of two or more thereof. With these resins, carboxymethylcellulose (CMC) or a salt thereof, polyethylene oxide (PEO), and the like may be used in combination.

The negative electrode 12 has a band-shaped negative electrode current collector 40 and a negative electrode mixture layers 42 formed on both surfaces of the negative electrode current collector 40. For the negative electrode current collector 40, a foil of a metal such as copper, a film in which such a metal is disposed on a surface layer thereof, or the like is used, for example. A thickness of the negative electrode current collector 40 is, for example, 5 µm to 30 µm.

The negative electrode mixture layer 42 is preferably formed on an entire region of both surfaces of the negative electrode current collector 40 except for a negative electrode current collector exposed part 44, described later. The negative electrode mixture layer 42 preferably includes a negative electrode active material and a binder. The negative electrode mixture layer 42 is produced by: applying a negative electrode mixture slurry including the negative electrode active material, the binder, and a solvent such as water on both surfaces of the negative electrode current collector 40; and drying and compressing the negative electrode mixture layer 42.

In the example illustrated in FIG. 3, the negative electrode current collector exposed part 44 is provided on the internal winding end part 12a and external winding end part 12b in the longitudinal direction of the negative electrode 12 and over an entire length in the band width direction of the current collector. The negative electrode current collector exposed part 44 is a portion where a surface of the negative electrode current collector 40 is uncovered with the negative electrode mixture layer 42. The negative electrode current collector exposed part 44 is provided by, for example, intermittent application in which the negative electrode mixture slurry is not applied on a part of the negative electrode current collector 40.

Onto the negative electrode current collector exposed part 44 of the internal winding end part 12a, one end of the negative electrode lead 20 is connected with ultrasonic welding or the like. The negative electrode current collector exposed part 44 is preferably provided on both surfaces of the negative electrode 12 to be stacked in the thickness direction of the negative electrode 12 from a viewpoint of operability of connecting the negative electrode lead 20. The other end of the negative electrode lead 20 extends downward from the end surface in the band width direction near the winding axial center of the electrode assembly 14 when wound as the electrode assembly 14. The position of the negative electrode lead 20 to be disposed is not particularly limited to the example illustrated in FIG. 3, and the negative electrode current collector exposed part 44 may be provided corresponding to the position of the negative electrode lead 20 to be disposed. For example, the negative electrode lead 20 may be provided on the external winding end part 12b of the negative electrode 12.

The negative electrode current collector exposed part 44 of the external winding end part 12b is positioned on the outermost circumference surface of the electrode assembly 14, and is in contact with the exterior 15. Thus, a current pathway to the negative electrode terminal is achieved in addition to the negative electrode lead 20, resulting in improvement of output characteristics of the battery. The negative electrode current collector 40 is more preferably exposed on an entire surface of the outermost circumference surface of the electrode assembly 14. Thus, a contacting area of the negative electrode current collector exposed part 44 and the exterior 15 increases, resulting in further improvement of output characteristics of the battery. When the negative electrode current collector 40 is exposed on the entire surface of the outermost circumference surface of the electrode assembly 14, a length in the longitudinal direction of the negative electrode current collector exposed part 44 may be larger than a length of the outermost circumference of the electrode assembly 14.

The negative electrode mixture layer 42 includes: a first negative electrode active material; and a second negative electrode active material having a larger expansion coefficient during charge than the first negative electrode active material. The first negative electrode active material may be, for example, a carbonaceous material such as natural graphite and artificial graphite. The second negative electrode active material may be, for example, a metal that forms an alloy with lithium, such as Si and Sn, or an alloy or oxide including them. The second negative electrode active material is preferably a Si-based material. Examples of the Si-based material include Si, an alloy including Si, and a silicon oxide represented by SiOₓ (x represents 0.8 to 1.6). Since the second negative electrode active material may occlude more lithium than the first negative electrode active material, use of the second negative electrode active material for the negative electrode active material may increase the battery capacity.

When a proportion of a mass of the second negative electrode active material to a total mass of the first negative electrode active material and the second negative electrode active material is defined as a percentage of the second negative electrode active material, in the electrode assembly 14, the percentage of the second negative electrode active material on an internal winding end part 12a side is smaller than the percentage of the second negative electrode active material on an external winding end part 12b side. This eliminates excessive pressure near the internal winding end part during charge, and occurrence of the internal short-circuit may be inhibited. The percentage of the second negative electrode active material may gradually decrease at a certain proportion from the external winding end part 12b side to the internal winding end part 12a side, and the decrease proportion between the external winding end part 12b side and the internal winding end part 12a side may change. When the negative electrode mixture layer is formed by using a multilayer die coater, as described later, the percentage of the second negative electrode active material preferably decreases at a certain proportion from the external winding end part 12b side to the internal winding end part 12a side in terms of production convenience.

The proportion of the mass of the second negative electrode active material to the total mass of the first negative electrode active material and the second negative electrode active material in the entire negative electrode mixture layer 42 is preferably 2 mass% to 20 mass%, and more preferably 5 mass% to 15 mass%. Within this range, the battery reliability may be further improved while aiming to increase the battery capacity.

For the binder included in the negative electrode mixture layer 42, fluororesins such as PTFE and PVdF, PAN, PI, an acrylic resin, a polyolefin resin, and the like may be used similar to that in the positive electrode 11, but styrene-butadiene rubber (SBR) is preferably used. The negative electrode mixture layer 42 may include CMC or a salt thereof, polyacrylic acid (PAA) or a salt thereof, polyvinyl alcohol (PVA), and the like as a thickener. These materials may be used singly, or may be used in combination of two or more thereof. A content of the binder in the negative electrode mixture layer 42 may be, for example, 0.5 mass% to 10 mass%.

The negative electrode mixture layer 42 may be formed by using a multilayer die coater, for example. Using the multilayer die coater may simultaneously apply a plurality of the negative electrode mixture slurries having different percentages of the second negative electrode active material on the negative electrode current collector 40 with regulating their application amount ratios. When the negative electrode mixture slurry is applied on the negative electrode current collector 40, the negative electrode current collector 40 moves relative to the multilayer die coater. Thus, applying the plurality of the negative electrode mixture slurries having different percentages of the second negative electrode active material on the negative electrode current collector 40 with changing their application amount ratios at a predetermined timing may form a region where the percentage of the second negative electrode active material changes from the internal winding end part 12a side to the external winding end part 12b side in any position in the negative electrode mixture layer 42.

For example, prepared are: a first negative electrode mixture slurry; and a second negative electrode mixture slurry having a smaller percentage of the second negative electrode active material than the first negative electrode mixture slurry. Then, the first and second negative electrode mixture slurries are applied from the internal winding end part 12a side to the external winding end part 12b side by using the multilayer die coater with increasing an application amount ratio of the first negative electrode mixture slurry to the second negative electrode mixture slurry. This application yields the negative electrode mixture layer 42 in which the percentage of the second negative electrode active material decreases in a certain proportion from the external winding end part 12b side to the internal winding end part 12a side.

The application amounts of the first and second negative electrode mixture slurries may be regulated so that a charge capacity per unit area of the negative electrode mixture layer 42 is constant in the longitudinal direction of the negative electrode 12. For example, in the above example, the internal winding end part 12a side has a smaller percentage of the second negative electrode active material than the external winding end part 12b side. Thus, setting the application amount on the internal winding end part 12a side larger than that on the external winding end part 12b side may achieve the constant charge capacity per unit area of the negative electrode mixture layer 42 in the longitudinal direction of the negative electrode 12.

### EXAMPLES

Hereinafter, the present disclosure will be further described with Examples, but the present disclosure is not limited to these Examples.

### <Example 1>

### [Production of Positive Electrode]

Mixing 100 parts by mass of LiNi_{0.88}Co_{0.09}Al_{0.03}O₂, 1 part by mass of acetylene black (AB), and 0.9 parts by mass of polyvinylidene fluoride (PVdF) was performed, and an appropriate amount of N-methyl-2-pyrrolidone (NMP) was added to prepare a positive electrode mixture slurry. Then, this positive electrode mixture slurry was applied on both surfaces of a band-shaped positive electrode current collector made of aluminum foil having a thickness of 15 µm, the coating film was dried, and then the dried coating film was compressed by using a roll-pressing machine to adjust the entire thickness to 0.144 mm. This product was cut to 62.6 mm in width and 861 mm in length to produce a positive electrode having a positive electrode current collector exposed part in a substantially central part in the longitudinal direction and having positive electrode mixture layers formed on both surfaces of the positive electrode current collector. Thereafter, one end of a positive electrode lead made of aluminum was welded with the positive electrode current collector exposed part.

### [Production of Negative Electrode]

As the negative electrode active material, used was a mixture A of 89 parts by mass of graphite and 11 parts by mass of SiO. Mixing 100 parts by mass of the mixture A, 1 part by mass of carboxymethylcellulose (CMC), and 1 part by mass of styrene-butadiene rubber (SBR) was performed, and an appropriate amount of water was added to prepare a first negative electrode mixture slurry. In addition, as the negative electrode active material, used was a mixture B of 93 parts by mass of graphite and 7 parts by mass of SiO. Mixing 100 parts by mass of the mixture B, 1 part by mass of CMC, and 1 part by mass of SBR was performed, and an appropriate amount of water was added to prepare a second negative electrode mixture slurry. Then, the first negative electrode mixture slurry and the second negative electrode mixture slurry were set in a multilayer die coater, and applied on both surfaces of a band-shaped negative electrode current collector made of copper foil having a thickness of 8 µm with continuously changing an application ratio between the first negative electrode mixture slurry and the second negative electrode mixture slurry to be 0: 1 to 1:0 from an internal winding end part side to an external winding end part so that a charge capacity per unit area was constant in the longitudinal direction. Then, the coating film was dried. The dried coating film was compressed by using a roll-pressing machine to adjust the entire thickness to 0.160 mm, and then this product was cut to 64.2 mm in width and 959 mm in length to produce a negative electrode having negative electrode current collector exposed parts in the internal winding end part and the external winding end part in the longitudinal direction and having negative electrode mixture layers formed on both surfaces of the negative electrode current collector. Thereafter, one end of a negative electrode lead made of nickel/copper was welded with the negative electrode current collector exposed part in the internal winding end part.

### [Production of Electrode Assembly]

The above positive electrode and the above negative electrode were wound with a separator made of polyethylene interposed therebetween to produce an electrode assembly. An outermost circumference surface of the electrode assembly was covered with the negative electrode current collector exposed part. Onto each of an upper end and lower end of the outermost circumference surface of the electrode assembly, a tape made of polypropylene with 12 mm in width, 30 µm in thickness, and 50 mm in length was adhered.

### [Preparation of Electrolyte Liquid]

Into 100 parts by mass of a mixed solvent of ethylene carbonate (EC) and dimethyl carbonate (DMC) (EC : DMC = 1:3 in a volume ratio), 5 parts by mass of vinylene carbonate (VC) was added. Into the above mixed solvent, LiPF₆ was dissolved so that a concentration was 1.5 mol/L to prepare an electrolyte liquid.

### [Production of Cylindrical Secondary Battery]

Insulating plates were disposed on each upper and lower sides of one electrode assembly, and the electrode assembly was housed in an exterior. Then, the negative electrode lead was welded with the bottom of the exterior, and the positive electrode lead was welded with a sealing assembly. Thereafter, the electrolyte liquid was injected inside the exterior by a pressure reducing method, and then an opening end of the exterior was sealed to be caulked to the sealing assembly with a gasket interposed therebetween to produce a cylindrical secondary battery. A capacity of the produced battery was 4600 mAh.

### <Example 2>

A battery was produced in the same manner as in Example 1 except that: in the production of the negative electrode, a mixture of 90 parts by mass of graphite and 10 parts by mass of SiO was used as the mixture A; and a mixture of 92 parts by mass of graphite and 8 parts by mass of SiO was used as the mixture B.

### <Example 3>

A battery was produced in the same manner as in Example 1 except that: in the production of the negative electrode, a mixture of 88 parts by mass of graphite and 12 parts by mass of SiO was used as the mixture A; and a mixture of 92 parts by mass of graphite and 8 parts by mass of SiO was used as the mixture B.

### <Comparative Example>

A battery was produced in the same manner as in Example 1 except that: in the production of the negative electrode, a mixture of 91 parts by mass of graphite and 9 parts by mass of SiO was used as the mixture A; and only the first negative electrode mixture slurry was applied on both surfaces of the negative electrode current collector.

### [Evaluation of Deformation of Negative Electrode near Internal Winding End Part]

Under a temperature environment at 45°C, the batteries of Examples and Comparative Example were charged at a constant current of 0.3 C (= 1380 mA) until a battery voltage reached 4.2 V, and then charged at a constant voltage of 4.2 V until a current value reached 0.02 C (= 92 mA). Subsequently, the batteries were discharged at a constant current of 0.5 C (= 2300 mA) until the battery voltage reached 2.5 V, and this charge and discharge were specified as one cycle. This charge-discharge cycle was repeated 1000 cycles, and then the batteries were charged at a constant current of 0.3 C until the battery voltage reached 4.2 V, and then charged at a constant voltage of 4.2 V until the current value reached 0.02 C. A cross section near the internal winding end part of the electrode assembly of these batteries was observed by using an X-ray computed tomography (CT) device to check presence/absence of deformation of the negative electrode.

Table 1 shows the evaluation results of Examples and Comparative Example. Table 1 also shows the proportions of SiO in the first and second negative electrode mixture slurries.

**[Table 1]**

| | Proportion of SiO (parts by mass) | | Evaluation results |
|---|---|---|---|
| | First negative electrode mixture slurry | Second negative electrode mixture slurry | Deformation of negative electrode |
| Example 1 | 11 | 7 | Absence |
| Example 2 | 10 | 8 | Absence |
| Example 3 | 12 | 8 | Absence |
| Comparative Example | 9 | - | Presence |

In Examples 1 to 3, no deformation of the negative electrode is observed after 1000 cycles, and occurrence risk of the minute short-circuit near the internal winding end part is inhibited compared with Comparative Example.

### REFERENCE SINGS LIST

10 Secondary battery, 11 Positive electrode, 12 Negative electrode, 12a Internal winding end part, 12b External winding end part, 13 Separator, 14 Electrode assembly, 15 Exterior, 16 Sealing assembly, 17, 18 Insulating plate, 19 Positive electrode lead, 20 Negative electrode lead, 21 Groove, 22 Filter, 23 Lower vent member, 24 Insulating member, 25 Upper vent member, 26 Cap, 26a Opening, 27 Gasket, 28 Winging axis, 30 Positive electrode current collector, 32 Positive electrode mixture layer, 34 Positive electrode current collector exposed part, 40 Negative electrode current collector, 42 Negative electrode mixture layer, 44 Negative electrode current collector exposed part

## Claims

1. A non-aqueous electrolyte secondary battery, comprising:
an electrode assembly in which a positive electrode and a negative electrode are wound with a separator interposed therebetween;
a non-aqueous electrolyte; and
an exterior housing the electrode assembly and the non-aqueous electrolyte, wherein
the negative electrode includes: a first negative electrode active material; and a second negative electrode active material having a larger expansion coefficient during charge than the first negative electrode active material, and
when a proportion of a mass of the second negative electrode active material to a total mass of the first negative electrode active material and the second negative electrode active material is defined as a percentage of the second negative electrode active material, the percentage of the second negative electrode active material on an internal winding end part side is smaller than the percentage of the second negative electrode active material on an external winding end part side.

2. The non-aqueous electrolyte secondary battery according to claim 1, wherein
the first negative electrode active material is a carbonaceous material, and
the second negative electrode active material is a silicon-based material.
